# EUROPÄISCHE PATENTANMELDUNG

(11) **EP 2 228 560 A2**
(43) Veröffentlichungstag der Anmeldung: **15.09.2010**
(21) Anmeldenummer: 10002589.9
(22) Anmeldetag: 11.03.2010
(51) Int. Cl.: F16F 1/12

(54) **Federelement**

(30) Priorität: 11.03.2009 DE 202009003460 U
(71) Anmelder: Diemer & Dr. Jaspert GbR, 85630 Grasbrunn (DE)
(72) Erfinder: Jaspert, Bodo, F., 85630 Grasbrunn (DE); Diemer, Gregor, 85456 Wartenberg (DE)
(74) Vertreter: Manitz, Finsterwald & Partner GbR

(57) **Zusammenfassung**

Federelement mit einem Federkörper (1) und einem lösbar mit dem Federkörper verbundenen Befestigungsstück (2) zur Befestigung des Federelements auf einer Unterlage, wobei zwischen Federkörper und Befestigungsstück eine Formschlussverbindung vorgesehen ist mit einem am Federkörper oder Befestigungsstück vorgesehenen weiblichen Element (11) und einem am anderen Teil vorgesehenen männlichen Element (7), wobei ein Zwischenstück (9) vorgesehen ist, welches auf seiner einen Seite ein mit dem männlichen Element übereinstimmendes männliches Element (10) und auf seiner anderen Seite ein mit dem weiblichen Element übereinstimmendes weibliches Element (12) aufweist und wahlweise zwischen Federkörper und Befestigungsstück einsetzbar ist.

## Beschreibung

Die vorliegende Erfindung betrifft ein Federelement mit einem Federkörper und einem lösbar mit dem Federkörper verbundenen Befestigungsstück zur Befestigung des Federelements auf einer Unterlage, wobei zwischen Federkörper und Befestigungsstück eine Formschlussverbindung vorgesehen ist mit einem am Federkörper oder Befestigungsstück vorgesehenen weiblichen Element und einem am anderen Teil vorgesehenen männlichen Element.

Derartige Federelemente werden beispielsweise als Teil einer Untermatratze mit einer Vielzahl von über mindestens einen Teil der Untermatratze verteilt angeordneten, voneinander unabhängigen derartigen Federelementen zur Abstützung einer Obermatratze oder als Federkern einer Obermatratze eingesetzt. In Untermatratzen ersetzen sie in den entsprechenden Bereichen die herkömmlichen Federleisten und bringen den Vorteil einer quasi punktelastischen Abstützung mit sich. Dabei ist es oftmals notwendig, unterschiedliche Höhen der Federelemente zu realisieren, beispielsweise eine geringere Höhe im Schulterbereich und eine größere Höhe im Lordosenbereich.

Der Erfindung liegt die Aufgabe zugrunde, eine vorteilhafte Höhenverstellung für derartige Federelemente anzugeben.

Diese Aufgabe wird dadurch gelöst, dass ein Zwischenstück vorgesehen ist, welches auf seiner einen Seite ein mit dem männlichen Element übereinstimmendes männliches Element und auf seiner anderen Seite ein mit dem weiblichen Element übereinstimmendes weibliches Element aufweist und wahlweise zwischen Federkörper und Befestigungsstück einsetzbar ist.

Ein derartiges Zwischenstück ist besonders kostengünstig herstellbar und kann einfach zwischen den Federkörper und das Befestigungsstück eingesetzt werden, um die Höhe des Federelementes entsprechend zu vergrößern. Der Höhenunterschied ergibt sich dabei durch die Dicke des Zwischenstückes, wobei auch Zwischenstücke mit unterschiedlicher Höhe vorgesehen und verwendet werden können. Außerdem können anstelle nur eines Zwischenstückes zwei oder mehr Zwischenstücke zwischen das Befestigungsstück und den Federkörper eingesetzt werden. Auch hierdurch kann eine weitere Vergrößerung der Höhe des Federelementes erreicht werden.

Männliches und weibliches Element des Zwischenstücks können auch um 90° gegeneinander verdreht angeordnet sein. Mit einem solchen Zwischenstück kann neben einer Höheneinstellung auch eine Verdrehung des Federelements um 90° gegenüber einer Unterlage erreicht werden.

Die Formschlussverbindung ist bevorzugt als Bajonettverschluss ausgebildet. Das männliche Element ist dabei insbesondere durch zwei in entgegengesetzte Richtungen weisende Vorsprünge und das weibliche Element durch entsprechende Hinterschnitte verwirklicht. Durch Relativverdrehung des männlichen Elementes gegenüber dem weiblichen Element kann die Formschlussverbindung gelöst oder geschlossen werden.

Das Zwischenstück ist bevorzugt als flache Scheibe ausgebildet und weist ebenfalls bevorzugt einen strukturierten Rand auf. Dadurch kann die Verdrehung des Zwischenstückes zum Lösen und Schließen der Formschlussverbindung leicht erfolgen. Das Zwischenstück kann mit paralleler Ober- und Unterseite, aber auch schräg ausgebildet sein, um eine Verkippung des Federelements gegenüber einer Unterlage zu bewirken.

Alle Elemente des erfindungsgemäßen Federelementes bestehen jeweils bevorzugt aus Kunststoff. Die Vorsprünge und Hinterschnitte sind dabei jeweils bevorzugt angeformt. Dadurch können die Herstellungskosten weiter gesenkt werden.

Der Federkörper des Federelementes kann mindestens eine Wendel umfassen, die einerseits auf einem Fuß abgestützt ist und andererseits eine Kopfplatte oder ein Verbindungsstück zu einer Kopfplatte trägt. Derartige Federelemente haben sich als besonders vorteilhaft herausgestellt.

Ein Ausführungsbeispiel der Erfindung ist in der Zeichnung dargestellt und nachfolgend beschrieben. Es zeigen, jeweils in schematischer Darstellung,
- Fig. 1: eine perspektivische Ansicht eines erfindungsgemäßen Federelementes,
- Fig. 2: eine andere perspektivische Ansicht des Federelementes von Fig. 1 mit gelöstem Befestigungsstück,
- Fig. 3: eine Seitenansicht des Zwischenstücks,
- Fig. 4: eine um 90° gedrehte Seitenansicht des Zwischenstücks,
- Fig. 5: eine perspektivische Ansicht des Zwischenstücks und
- Fig. 6: eine Draufsicht auf die Oberseite des Zwischenstücks.

Das dargestellte Federelement umfasst einen Federkörper 1 und ein lösbar mit dem Federkörper 1 verbundenes Befestigungsstück 2 zur Befestigung des Federelementes auf einer Unterlage, beispielsweise einem Träger einer Untermatratze. Der Federkörper 1 besteht aus vier Wendelfedern 3, die sich jeweils mit einem Ende auf einem Fuß 4 abstützen und mit ihrem anderen Ende ein Verbindungsstück 5 zu einer hier nicht dargestellten Kopfplatte tragen.

Das Befestigungsstück 2 weist einen Grundkörper 6 und zwei daran angeformte, von einander wegweisende Vorsprünge 7 auf. Auf der Unterseite des Befestigungsstückes 2 sind zwei Dübelelemente 8 angeformt. Der Fuß 4 des Federelementes ist mit Hinterschnitten 11 ausgebildet, die zu den Vorsprüngen 7 reziprok ausgebildet sind, sodass die Vorsprünge 7 mit den Hinterschnitten 11 eine Bajonettverbindung bilden, die durch Eindrehen des Befestigungsstückes 2 in den Fuß 4 des Federelementes geschlossen und durch entgegengesetztes Drehen wieder gelöst werden kann.

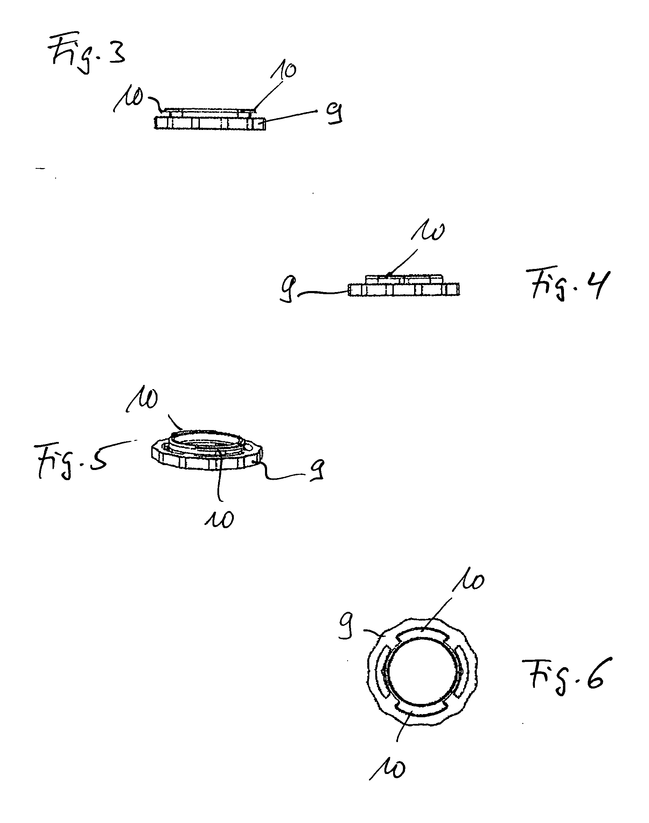

Das in den Figuren 3 bis 6 separat dargestellte Zwischenstück 9 ist als flache Scheibe ausgebildet und weist auf seiner Oberseite voneinander wegweisende Vorsprünge 10 auf, die von Form und Größe her den Vorsprünge 7 des Befestigungsstückes 2 entsprechen. Auf der Unterseite ist das Zwischenstück 9 mit Hinterschnitten 12 ausgebildet, die den Hinterschnitten 11 im Fuß 4 des Federelementes entsprechen. Daher sind auch die Hinterschnitte 12 des Zwischenstückes 9 reziprok zu den Vorsprüngen 7 des Befestigungsstückes 2 sowie zu den Vorsprüngen 10 des Zwischenstückes 9.

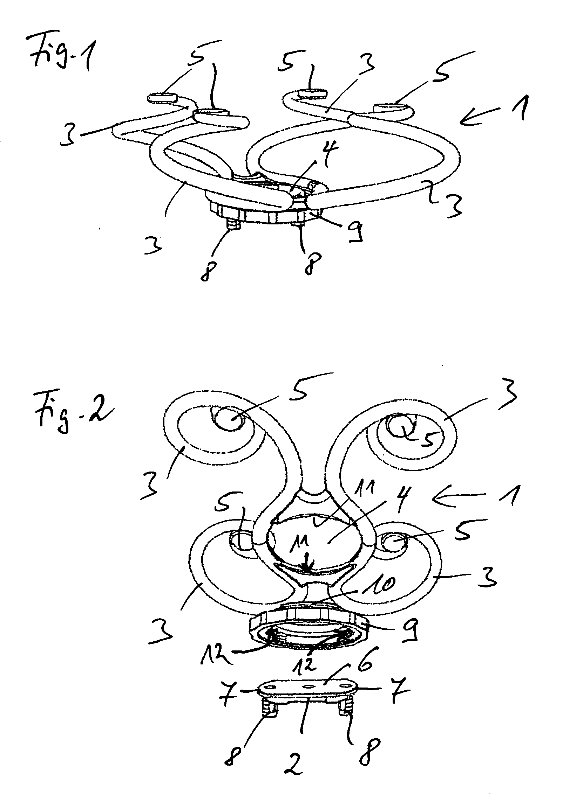

Auf diese Weise kann das Zwischenstück 9, wie in Fig. 1 und 2 dargestellt, mit dem Fuß 4 des Federelementes lösbar verbunden werden, indem das Zwischenstück 9 bajonettartig in den Fuß 4 eingesetzt wird. In das Zwischenstück 9 kann dann entsprechend das Befestigungsstück 2 lösbar eingesetzt werden, sodass die Höhe des Federelementes um die Höhe des Zwischenstückes 9 vergrößert ist.

Um wieder die geringere Höhe zu erreichen, wird das Zwischenstück 9 vom Fuß 4 des Federelementes gelöst und das Befestigungsstück 2 unmittelbar mit dem Fuß 4 verbunden. In der selben Weise können zwei oder mehr Zwischenstücke 9 mit dem Fuß 4 verbunden werden, oder es können andere Zwischenstücke mit abweichender Höhe mit dem Fuß 4 verbunden werden.

Durch die dargestellte und beschriebene Erfindung ergibt sich eine einfache und kostengünstige Höhenverstellung für Federelemente.

### Bezugszeichenliste

- 1: Federkörper
- 2: Befestigungsstück
- 3: Wendelfeder
- 4: Fuß
- 5: Verbindungsstück
- 6: Grundkörper
- 7: Vorsprung
- 8: Dübelelement
- 9: Zwischenstück
- 10: Vorsprung
- 11: Hinterschnitt
- 12: Hinterschnitt

## Patentansprüche

1. Federelement mit einem Federkörper (1) und einem lösbar mit dem Federkörper (1) verbundenen Befestigungsstück (2) zur Befestigung des Federelements auf einer Unterlage, wobei zwischen Federkörper (1) und Befestigungsstück (2) eine Formschlussverbindung vorgesehen ist mit einem am Federkörper (1) oder Befestigungsstück (2) vorgesehenen weiblichen Element (11) und einem am anderen Teil vorgesehenen männlichen Element (7),
**dadurch gekennzeichnet, dass**
ein Zwischenstück (9) vorgesehen ist, welches auf seiner einen Seite ein mit dem männlichen Element (7) übereinstimmendes männliches Element (10) und auf seiner anderen Seite ein mit dem weiblichen Element (11) übereinstimmendes weibliches Element (12) aufweist und wahlweise zwischen Federkörper (1) und Befestigungsstück (2) einsetzbar ist.

2. Federelement nach Anspruch 1,
**dadurch gekennzeichnet,**
**dass** zwei oder mehr Zwischenstücke (9) vorgesehen sind, die wahlweise zwischen das Befestigungsstück (2) und den Federkörper (1) einsetzbar sind.

3. Federelement nach Anspruch 2,
**dadurch gekennzeichnet,**
**dass** Zwischenstücke (9) unterschiedlicher Höhe vorgesehen sind.

4. Federelement nach einem der vorhergehenden Ansprüche,
**dadurch gekennzeichnet,**
**dass** das männliche Element (7) und das weibliche Element (11) des Zwischenstücks (9) um 90° gegeneinander verdreht angeordnet sind.

5. Federelement nach einem der vorhergehenden Ansprüche,
**dadurch gekennzeichnet,**
**dass** die Formschlussverbindung als Bajonettverschluss ausgebildet ist, wobei das männliche Element (7) bevorzugt durch zwei in entgegengesetzter Richtungen weisende Vorsprünge (7) und das weibliche Element (11) bevorzugt durch entsprechende Hinterschnitte (11) verwirklicht ist.

6. Federelement nach einem der vorhergehenden Ansprüche,
**dadurch gekennzeichnet,**
**dass** das Zwischenstück (9) als flache Scheibe ausgebildet ist.

7. Federelement nach einem der vorhergehenden Ansprüche,
**dadurch gekennzeichnet,**
**dass** das Zwischenstück (9) einen strukturierten Rand aufweist.

8. Federelement nach einem der vorhergehenden Ansprüche,
**dadurch gekennzeichnet,**
**dass** Ober- und Unterseite des Zwischenstücks (9) zueinander parallel oder schräg ausgebildet sind.

9. Federelement nach einem der vorhergehenden Ansprüche,
**dadurch gekennzeichnet,**
**dass** alle Elemente des Federelementes aus Kunststoff bestehen,
wobei Vorsprünge (7) und Hinterschnitte (11) bevorzugt angeformt sind.

10. Federelement nach einem der vorhergehenden Ansprüche,
**dadurch gekennzeichnet,**
**dass** der Federkörper (1) mindestens eine Wendel umfasst, die einerseits auf einem Fuß (4) abgestützt ist und andererseits eine Kopfplatte trägt.

11. Federelementsystem mit einem Federelement nach einem der vorhergehenden Ansprüche,
**dadurch gekennzeichnet,**
**dass** zwei oder mehr Zwischenstücke (9) vorgesehen sind, wobei die Zwischenstücke (9) unterschiedliche Höhe und/oder unterschiedliche Form, insbesondere parallele Ober- und Unterseiten oder zueinander schräge Ober- und Unterseiten aufweisen.
